# EUROPEAN PATENT APPLICATION

(11) **EP 4 542 835 A1**
(43) Date of publication of application: **23.04.2025**
(21) Application number: 23204056.8
(22) Date of filing: 17.10.2023
(51) Int. Cl.: H02K 15/00, H02K 15/03

(54) **METHOD AND DEVICE FOR DISASSEMBLING A ROTOR ASSEMBLY**

(71) Applicant: Inserma Anoia S.L, 08787 La Pobla de Claramunt (ES)
(72) Inventor: Ortiz Liebanas, Francisco, 08700 Igualada (ES)
(74) Representative: LBP Lemcke, Brommer & Partner Patentanwälte mbB

(57) **Abstract**

Method for disassembling a rotor assembly (1) comprising the following steps:
A) Providing a rotor assembly (1), which comprises a laminated stack (3) with multiple metal sheets (4) and a plurality of permanent magnets (5), which are attached to the laminated stack (3) by means of an adhesive (6);
B) Thermal treatment of the rotor assembly (1) for simultaneously demagnetizing the permanent magnets (5) and dissolving the adhesive (6);
C) Mechanical excitation of the heated rotor assembly (1) to separate at least the laminated stack (3) and the demagnetized magnets (5).

## Description

The invention relates to a method and a device for disassembling a rotor assembly.

Rare earth metals are crucial materials for the successful green and digital transformation of various industrial sectors and are used in various types of electric machines. In particular, electric machines are used as electric motors in both mobile and stationary drive systems as well as generators for energy supply purposes.

The production of electric machines strongly depends on the availability of permanent magnets, which is why the recycling and reuse of end-of-life permanent magnets from motors and generators (e.g. from industrial applications or electromobility) plays a key role in a resilient and sustainable production of electric machines.

Whereas tremendous progress has been made in the development of technologies to recycle magnets from waste streams, it is becoming increasingly apparent that the economic success of magnet recycling depends less on the technical feasibility of the recycling process itself. Rather, the main costs result from the extraction of magnets from components of electric machines, which is often complicated by the design of said electric machines and the lacking suitability for recycling of the components.

The objective of the present invention is to provide a way to enable partially or fully automated extraction of permanent magnets from electric machines in an economically viable manner to exploit a future highly interesting source of end-of-life permanent magnets.

The objective is solved by a method according to claim 1 and a device according to claim 14. Preferred embodiments are subject matters of dependent claims.

According to the invention, the method for disassembling a rotor assembly comprises the following steps:
A) Providing a rotor assembly, which comprises a laminated stack with multiple metal sheets and a plurality of permanent magnets, which are attached to the laminated stack by means of an adhesive;
B) Thermal treatment of the rotor assembly for simultaneously demagnetizing the permanent magnets and dissolving the adhesive;
C) Mechanical excitation of the heated rotor assembly at least to separate the laminated stack and the demagnetized magnets.

The invention is based on the realization that the permanent magnets can easily be retrieved from a rotor assembly by simple means and efficiently, in particular without the necessity for machining the rotor assembly or its components.

A rotor assembly, which is disassembled by carrying out method steps A) to C) can typically be found in electric machines such as electric motors or generators. It is used for converting electrical energy into mechanical energy in the case of motors or vice versa in the case of generators. According to the invention, the rotor assembly is not limited to a particular type. In particular, however, the rotor assembly can be suited for use in a permanently excited synchronous machine.

The laminated stack is a core component of the rotor assembly. It consists of multiple thin metal sheets that are stacked together. The laminations are usually made of a magnetic material, such as iron or steel. The purpose of using laminations is to reduce eddy current losses, which can occur in solid metal cores when the rotor rotates within a magnetic field. The metal sheets are insulated from each other to minimize these losses.

The permanent magnets are attached to the laminated stack and are in particular based on rare earth metals. Rare earth metals comprise light rare earth elements (LREE) such as neodymium, praseodymium or heavy rare earth elements (HREE) such as dysprosium and terbium. The purpose of these magnets is to create a magnetic field that interacts with a stator, which is the stationary part of the electric machine, to generate mechanical torque in the case of a motor or induce electrical voltage in the case of a generator. At least in method step A) the permanent magnets may be superficially attached to the laminated stack or may be arranged (also: buried) within the laminated stack.

The adhesive is used to attach the permanent magnets to the laminated stack securely, in particular independently of how the magnets are attached to the laminated stack. It ensures that the magnets remain in their desired positions and do not move or shift during operation of the electric machine. The adhesive may be selected as to withstand the mechanical and thermal stresses experienced during the rotor's operation.

The invention is not limited to how method step A) is performed. In particular, method step A) may be performed manually and/or automatically, preferably by means of an automatic handling system and/or an automatic transport system. The automatic handling system may in particular comprise a handling unit, such as a robotic arm, which is configured to pick up and transport rotor assemblies with high flexibility and precision in terms of positioning. Additionally or alternatively, the automatic transport system may comprise a conveyor system, such as a conveyor belt or comparable or, for example, an automated guided vehicle (AGV), which may autonomously navigate to transport the rotor assembly to perform method step A).

As described above, method step B) comprises a thermal treatment of the rotor assembly. It is an advantage of the invention that by thermally treating the rotor assembly both the permanent magnets are demagnetized and the adhesive, which fixed the permanent magnets to the laminated stack, is dissolved. This simplifies the detachment of the magnets from the laminated stack. In particular, the magnets and the laminated stack can have different thermal expansion properties, which also makes it easier to detach the magnets from the laminated stack.

Moreover, the adhesive may also keep the metal sheets of the laminated stack together. By dissolving the adhesive, therefore, not only the permanent magnets are detachable from the laminated stack but also the components of the laminated stack from each other, in particular the metal sheets.

The adhesive may in particular comprise a polymer. the adhesive may in particular contain a varnish or other coating agent by means of which the laminated stack and/or the permanent magnets are coated and which has an adhesive effect. In particular, the varnish or the other coating agent may be electrically insulating.

The thermal treatment of the magnets leads to demagnetization of the magnets, which at least partially dissolves their respective magnetic field and in particular a field force connection with other magnetic components of the rotor assembly, so that they can then be easily detached from the rotor assembly.

The mechanical excitation of the heated rotor assembly according to method step C) separates the laminated stack, in particular its metal sheets, and the demagnetized magnets from each other. It is a finding that the invention need not be limited to a particular type of excitation of the rotor assembly to enable reliable separation of the demagnetized magnets from the laminated stack. Thus, in principle, any singular, intermittent or periodically repeating excitation of the rotor assembly may be sufficient to effect the desired separation.

It is another finding that the excitation of rotor assembly should be done while the rotor assembly is still heated. In particular, this prevents the adhesive from re-solidifying and regaining an adhesive effect for the components to be separated. If the demagnetized magnets and the laminated stack, in particular its metal sheets, have different properties in terms of their thermal expansion, mechanical excitation of the heated rotor assembly can also simplify disassembly. It is an advantage that it is not necessary to provide cooling means or cooling time to reduce the temperature of the heated rotor assembly before separating the laminated stack, in particular its metal sheets, from the demagnetized magnets.

In a preferred embodiment, the thermal treatment of method step B) is carried out with a temperature between 300°C and 450°C.

Investigations by the applicant have shown that the temperature range as specified above is suitable for achieving both the desired effect in terms of demagnetization of the permanent magnets and dissolution of the adhesive in the most common rotor assemblies. In general, there is no limitation to how the temperature between 300°C and 450°C is achieved. In a preferred embodiment, however, the thermal treatment of method step B) is carried out by means of induction and/or convection.

A thermal treatment by means of induction utilizes an electromagnetic field to generate heat within the rotor assembly. A high-frequency alternating current is passed through one or more coils, creating a magnetic field that induces eddy currents within the rotor assembly, leading to rapid and controlled heating. This method is highly efficient, capable of precise temperature control, and provides uniform heating throughout the entire rotor assembly.

A thermal treatment by means of convection uses a circulation of a heated fluid, such as air or gas, to transfer heat to the rotor assembly. It ensures an even heating by eliminating hotspots, making it suitable for thermal treatment of rotor assemblies.

In a preferred embodiment, the mechanical excitation of method step C) is carried out by means of at least one thrust and/or impact against the rotor assembly, in particular against the laminated stack and/or the permanent magnets.

Basically any mechanical means can be used to perform the thrust and/or impact. Preferably, a striking tool, such as a hammer can be used. Furthermore, it is within the scope of the preferred embodiment that the thrust/impact is performed manually and/or automatically. It is within the scope of the preferred embodiment that the thrust and/or impact is carried out once or multiple times.

In a preferred embodiment the mechanical excitation of method step C) is carried out by means of a periodic agitation of the rotor assembly.

Investigations have shown that periodic excitation of the rotor assembly, in addition or as an alternative to performing a thrust/impact, is effective for separating the laminated stack, in particular its metal sheets, from the demagnetized magnets. Periodic excitation of the rotor assembly can be achieved in particular by means of a vibrating plate or a comparable means which is suitable for transferring a mechanical motion and/or force to the rotor assembly and set it in periodic motion.

The preferred embodiment is not limited to a specific excitation frequency or excitation amplitude or duration or direction of motion with which the rotor assembly is periodically excited. Preferably, however, the periodic agitation has a frequency between 1 Hz and 100 Hz and/or an amplitude between 0,1 mm and 10 mm and/or a duration between 1 second and 10 minutes. The aforementioned frequencies, amplitudes and durations have shown to be advantageous for a reliable disassembly of the rotor assembly. In particular, the frequency and/or amplitude and/or duration is set depending on the size and/or weight and/or structure of the rotor assembly.

In a preferred embodiment, in method step A) the rotor assembly comprises a rotor shaft which is attached to the laminated stack and which is detached from the laminated stack prior to method step B), in particular by pressing

In process step A), the rotor shaft is typically arranged coaxially to the laminated stack and can be connected to it by means of an interference fit and/or by means of adhesive. Separation of the laminated stack from the rotor shaft can be achieved in a simple manner by means of a pressing station, in which the laminated stack is supported against an abutment and a punch is pressed against the rotor shaft substantially along the longitudinal axis of the rotor shaft or vice versa.

In a preferred embodiment, the method comprises method step D), in which the laminated stack or its components and the permanent magnets are separately discharged.

A separate discharge of the laminated stack and the permanent magnets can be achieved in different ways, for example by means of a perforated plate, which has a support area and a plurality of openings, which are selected in size and shape in such a way that only the components of the laminated stack or the magnets fit through, while the respective other components are retained.

In a preferred embodiment, method steps B) and C) are carried out simultaneously. Alternatively, method steps B) and C) may be carried out successively.

As mentioned above, the objective of the invention is also solved by a disassembly device, which comprises a thermal treatment unit, a mechanical excitation unit and a control unit. The thermal treatment unit is designed to receive and heat a rotor assembly, which comprises a laminated stack with multiple metal sheets and a plurality of permanent magnets, which are attached to the laminated stack by means of an adhesive. The mechanical excitation unit is designed to exert a mechanical force to the rotor assembly. The control unit is configured to control the thermal treatment unit for simultaneously demagnetizing the permanent magnets and dissolving the adhesive and is furthermore configured to control the mechanical excitation unit to separate the stack of sheets and the permanent magnets.

Preferably, the disassembly device is suitable for carrying out a method according to the invention or a preferred embodiment.

In one possible embodiment, the thermal treatment unit can have a chamber which is provided for accommodating the rotor assembly and within which the rotor assembly can be heated. The chamber can be thermally connected to a temperature control means which is suitable for heating the chamber or preferably only the rotor assembly accommodated therein. In particular, the thermal treatment unit can comprise a convective heating unit or electric coils by means of which inductive heating of the rotor assembly is possible.

Preferably, the thermal treatment unit and the mechanical excitation unit are connected via a transportation means, for example an inclined sliding plane or a plurality of rollers, which is arranged between an output opening of the thermal treatment unit and an input opening of the mechanical excitation unit.

The mechanical excitation unit can have a receptacle in which the heated rotor assembly can be received. The receptacle is preferably coupled to a mechanical actuator which is designed to mechanically excite the receptacle intermittently or periodically. The excitation can be transferred to the heated rotor assembly, causing the demagnetized magnets to separate from the laminated stack and, in particular, causing the components of the laminated stack, especially the metal sheets, to separate from each other as well.

The receptacle may be a perforated plate, having a plurality of openings of different shapes and dimensions, designed to retain the detached magnets and to allow the components of the laminated stack to pass through, or vice versa. In this way, it is possible to easily remove the separated components of the rotor assembly separately from each other.

The control unit is preferably connected to the thermal treatment unit in terms of a signal connection and can be designed in the manner of a programmable logic controller.

In particular, the control unit may have a program routine stored thereon by means of which the thermal treatment unit and the mechanical excitation unit can be controlled for operation of the disassembly device, in particular according to the method according to the invention or a preferred embodiment thereof.

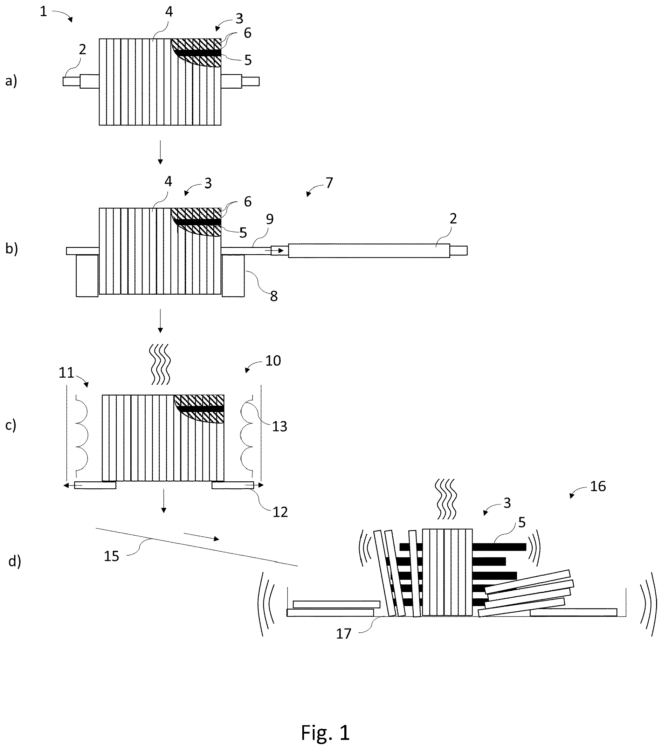

Advantages of the invention are explained below with reference to Figure 1.
- Figure 1: shows a method for disassembling a rotor assembly by using a disassembly device in views a), b), c) and d).

Electric machines are important devices for both mobile and stationary drive technology as well as for energy generation. Electric machines include valuable components, which should be recovered after reaching their lifetimes. This leads to cost advantages in the manufacture of new electric machines since some of the required components can be reused or recycled.

View a) of Figure 1 shows a rotor assembly 1, which is provided in a disassembly device, which comprises a pressing station 7, a thermal treatment unit 10 and a mechanical excitation unit 16, which are described in detail with regard to views b), c) and d) of Figure 1.

The rotor assembly 1 according to view a) of Figure 1 comprises a rotor shaft 2 that extends along a rotation axis (not shown) of the rotor assembly 1. The rotor shaft 2 is mechanically coupled to a laminated stack 3, which comprises a plurality of metal sheets 4. For a better overview, only one metal sheet 4 is shown with a reference sign. Furthermore, the rotor assembly comprises a plurality of permanent magnets 5, which are distributed over the circumference around the rotation axis of the rotor assembly 1 and which are "buried" within the laminated stack 3. Only one permanent magnet 5 is shown for a better overview.

An adhesive 6 is on the one hand used to fix the permanent magnets 5 within the laminated stack 3 and on the other hand to attach the metal sheets 4 of the laminated stack 3 to each other.

The permanent magnets 5 are manufactured from rare earth metals, which are costly to obtain. It is therefore in particular advantageous to be able to separate the permanent magnets 5 from the rotor shaft 2 and the laminated stack 3.

According to view b), the rotor assembly enters a pressing station 7, which is part of the device and in which the rotor shaft 2 is separated from the rest of the rotor assembly 1. For this purpose, the rotor assembly 1 is supported by a holding device 8 at the rotor shaft 2. At the same time, the holding device 8 acts as an abutment for the laminated stack 3, such that a punch tool 8 can press out the rotor shaft 2 parallel to its extension axis.

After retracting the punch tool 8, the laminated stack 3 and the permanent magnets 5 leave the punching station 7 by falling off due to a force of gravity and are received by a thermal treatment unit 10, which is located underneath the pressing station 7 as shown in view c). In another embodiment of the disassembly device, the thermal treatment unit 10 may also be in another location and the rotor assembly 3 be transported by additional handling means from the pressing station 7 to the thermal treatment unit 10.

The thermal treatment unit 10 is designed to receive and heat the rotor assembly 1, which comprises a laminated stack with multiple metal sheets 4 and the plurality of permanent magnets 5, which are attached to the laminated stack by means of the adhesive 6. For this purpose, the thermal treatment unit 10 has a chamber 11, which accommodates the rotor assembly 1 by moveable support means 12 and a plurality of coils 13 by means of which the rotor assembly 1 is heated.

Coils 13 are arranged within the chamber 11 and are configured to be supplied with a high frequent electric current in order to generate an electromagnetic field that induces eddy currents within the rotor assembly 1, leading to rapid and controlled heating up to temperatures between 300°C and 450°C.

On the one hand, heating the rotor assembly 1 in the above-mentioned temperature range causes the permanent magnets 5 to be almost completely demagnetized. On the other hand, the adhesive 6, which bonds the permanent magnets 5 to the laminated stack 3 and the metal sheets 4 of the laminated stack 3 to each other, is dissolved.

After the heating process is complete, the support means 12 are pulled out of the chamber and an area is cleared through which the rotor assembly 1 can exit the thermal treatment unit 10. In the present example, this occurs due to a force of gravity, as a result of which the rotor assembly 1 moves onto an inclined sliding plane 15 and reaches a mechanical excitation unit 16 that is shown in view d) of Figure 1.

The mechanical excitation unit 16 comprises a receptacle 17, which is mechanically coupled to an actuator (not shown). The actuator is configured to periodically agitate the receptacle 17 with a frequency between 1 Hz and 100 Hz and an amplitude between 0,1 mm and 10 mm for a duration between 1 second and 10 minutes. This causes the heated rotor assembly to disassemble, wherein the laminated stack 3 and the demagnetized magnets 5 as well as the metal sheets 4 are separated from each other.

A control unit (not shown) is configured to control the pressing station 7, the thermal treatment unit 10 and the mechanical excitation unit 16 for demagnetizing the permanent magnets and dissolving the adhesive and which is configured to control the mechanical excitation unit 16 to separate the stack of sheets and the permanent magnets by a periodic agitation.

## Claims

1. Method for disassembling a rotor assembly (1) comprising the following steps:
A) Providing a rotor assembly (1), which comprises a laminated stack (3) with multiple metal sheets (4) and a plurality of permanent magnets (5), which are attached to the laminated stack (3) by means of an adhesive (6);
B) Thermal treatment of the rotor assembly (1) for simultaneously demagnetizing the permanent magnets (5) and dissolving the adhesive (6);
C) Mechanical excitation of the heated rotor assembly (1) to separate at least the laminated stack (3) and the demagnetized magnets (5).

2. Method according to claim 1, wherein
the thermal treatment of method step B) is carried out with a temperature between 300°C and 450°C.

3. Method according to claim 2, wherein
the thermal treatment of method step B) is carried out by means of induction and/or convection.

4. Method according to at least one of the preceding claims, wherein
the mechanical excitation of method step C) is carried out by means of at least one thrust against the rotor assembly (1), in particular against the laminated stack (3) and/or the demagnetized magnets (5).

5. Method according to at least one of the preceding claims, wherein
the mechanical excitation of method step C) is carried out by means of a periodic agitation of the rotor assembly (1).

6. Method according to claim 5, wherein
the periodic agitation has a frequency between 1 Hz and 100 Hz and/or an amplitude between 0,1 mm and 10 mm and/or a duration between 1 second and 10 minutes.

7. Method according to at least one of the preceding claims, wherein
in method step A) the rotor assembly (1) comprises a rotor shaft (2) which is attached to the laminated stack (3) and which is removed from the laminated stack (3) prior to method step B), in particular by pressing.

8. Method according to claim 7, wherein
the adhesive (6) also fixes the plurality of metal sheets (4) within the laminated stack and during the thermal treatment of method step B) the adhesive is dissolved and the metal sheets (4) are detached from each other.

9. Method according to one of the preceding claims comprising the following method step:
D) Separate discharge of the laminated stack (3) or its components and the demagnetized magnets (5).

10. Method according to one of the preceding claims, wherein
method steps B) and C) are carried out simultaneously.

11. Method according to claims 1 to 10, wherein
method steps B) and C) are carried out successively.

12. Method according to one of the claims 1 to 11, wherein
in method step A), the permanent magnets (5) are superficially attached to the laminated stack (3).

13. Method according to one of the claims 1 to 11, wherein
in method step A), the permanent magnets (5) are arranged within the laminated stack (3), in particular buried within the laminated stack (3).

14. Disassembly device, in particular for carrying out a method according to one of the preceding claims, comprising
a thermal treatment unit (10), which is designed to receive and heat a rotor assembly (1), which comprises a laminated stack (3) with multiple metal sheets (4) and a plurality of permanent magnets (5), which are attached to the laminated stack (3) by means of an adhesive (6);
a mechanical excitation unit (16), which is designed to exert a mechanical force to the rotor assembly (1);
a control unit, which is configured to control the thermal treatment unit (10) for simultaneously demagnetizing the permanent magnets (6) and dissolving the adhesive (6) and which is configured to control the mechanical excitation unit (16) to separate the metal sheets (4) and the demagnetized magnets (5).
